# EUROPÄISCHE PATENTSCHRIFT

(11) **EP 2 065 722 B1**
(45) Veröffentlichungstag und Bekanntmachung des Hinweises auf die Patenterteilung: **02.04.2014**
(21) Anmeldenummer: 08020106.4
(22) Anmeldetag: 18.11.2008
(51) Int. Cl.: G01S 5/04, A63B 29/02

(54) **Vorrichtung zur Ortung von Objekten oder Personen, insbesondere für eine Lawinenverschüttetensuche sowie Verfahren zur Ortung**
Device for locating objects or people, in particular to find those lost in an avalanche and method of location
Dispositif destiné au positionnement d'objets ou de personnes, notamment pour une recherche de victimes d'une avalanche et procédé de positionnement

(30) Priorität: 19.11.2007 DE 102007055216; 28.03.2008 DE 102008016137
(43) Veröffentlichungstag der Anmeldung: 03.06.2009
(73) Patentinhaber: Fraunhofer-Gesellschaft zur Förderung der angewandten Forschung e.V., 80686 München (DE); proTime GmbH, 83209 Prien (DE)
(72) Erfinder: Schmidt, Stefan, Dipl.-Ing., 58579 Schalksmühle (DE); Waizmann, Gerd, Dipl.-Ing., 83083 Riedering (DE); Riesch, Josef, 85617 Aßling (DE); Leutner, Gerhard, 83233 Bernau am Chiemsee (DE); Rieser, Alexander, 83093 Bad Endorf (DE); Inninger, Wolfgang, Dipl.-Ing., 83229 Aschau (DE)
(74) Vertreter: Rösler, Uwe

(56) Entgegenhaltungen:
- US-A1- 2004 032 363
- US-A1- 2004 164 901
- US-A1- 2005 270 234

## Beschreibung

### Technisches Gebiet

Die Erfindung bezieht sich auf ein Verfahren, ein System sowie eine Vorrichtung zur Ortung wenigstens eines Senders, der zumindest zeitweise Sendersignale aussendet. Die Hauptanwendung des neuartigen Verfahrens sowie des hierfür erforderlichen Systems gilt der Ortung von Objekten und Personen, insbesondere von Personen, die mit einem Sender ausgestattet sind, vorzugsweise in Art eines Funksenders, und durch alpine Lawinenunglücke verschüttet worden sind und die es gilt in möglichst kurzer Zeit aufzufinden und zu bergen. Das neuartige Verfahren sowie die damit verbundenen Komponenten lassen sich jedoch auch in weiteren Szenarien einsetzen, in denen es gilt ruhende oder bewegliche Sender zu lokalisieren, wie es beispielsweise bei der überwachten Ortung von Einsatzpersonal bei Katastrophen- und Rettungssituationen wünschenswert ist.

### Stand der Technik

Eingeführt im Bereich der alpinen Lawinenrettung und durch die Norm ETSI DIN EN 300718 standardisiert sind Lawinenverschüttetensuchgeräte, kurz "LVS-Geräte, die in einem Sendebetriebsmodus zyklisch definierte Funksignale auf einer standardisierten Frequenz von 457 kHz aussenden und die zugleich auch die Möglichkeit vorsehen durch Umschalten in einen so genannten Such- oder Empfängermodus eine Peilung zu einem weiteren sich im Sendebetriebsmodus befindlichen LVS-Gerät vorzunehmen, d.h. im einfachsten Fall werden die Funksignale eines sendenden LVS-Gerätes empfangen und in Abhängigkeit der Empfangsstärke in akustisch oder optisch wahrnehmbare Signale umgesetzt. Zur Ortung eines sendenden LVS-Gerätes, gilt es Ortsveränderungen mit dem empfangenen LVS-Gerätes derart vorzunehmen, so dass die Empfangssignalstärke stets zunimmt, was sich bspw. akustisch durch eine zunehmende Wiederholrate von Piepsgeräuschen und/oder durch ein Ansteigen der Frequenz eines Tonsignals auszeichnet.

Modernere LVS-Geräte vermögen mittels digitaler Empfangs- und Signalauswertetechnik eine Abschätzung der Entfernung und Richtung von dem auf Empfang gerasterten LVS-Gerät zu einem verborgenen, sendenden LVS-Gerät anzugeben. Allen bekannten LVS-Geräten ist jedoch gemeinsam, dass die Handhabung schulungsbedürftig ist und der Einsatz derartiger Geräte nach einem bestimmten Vorgehensmuster vorzunehmen ist, das insbesondere im Ernstfall um so schwieriger anzuwenden wird, zumal durch die besondere Stresssituation bereits kleinste Unaufmerksamkeiten lebensbedrohliche Auswirkungen haben. Dies wird darüber hinaus nochmals erschwert, wenn mehrere LVS-Geräte im Gelände verschüttet wurden.

Weiterführende Entwicklungen sehen die Nutzung von Signalen zur Positionsbestimmung von LVS-Geräten vor, die von satellitengestützten Sendern zur Verfügung gestellt werden, allen voran so genannte GPS-Signale(Global Positioning System). In den Druckschriften DE29922217U1 und DE102004037655A wird der Einsatz von GPS-Signalen in Verbindung mit Lawinensuchgeräten beschrieben. Diese Ansätze gehen jedoch alle davon aus, dass das LVS-Gerät des Verschütteten einen GPS- Empfänger vorsieht, um die genaue Position der Verschüttung zu bestimmen. Diese Position wird über einen geeigneten Kommunikationskanal, an das LVS-Gerät des Suchenden übermittelt, an dem die genaue Verschüttetenposition auf einer Graphikoberfläche visuell dargestellt wird. Derartige Ansätze erweisen sich jedoch in der Praxis als unpraktikabel, da die von Satelliten gestützten Sendern ausgesandten Signale derart geringe Signalpegel aufweisen, d.h. ihre Signalstärken liegen unter dem thermischen Rauschen, so dass eine Positionsbestimmung eines innerhalb einer Lawine befindlichen GPS Empfängers nur sehr unwahrscheinlich und wenn überhaupt, mit großen Fehlern behaftet ist. Erschwerend kommt hinzu, dass der bei Globalen Navigationssatellitensystemen, kurz GNSS, verwendete Frequenzbereich durch Wasser und somit auch durch Schnee extrem abgeschirmt wird.

Auch das in der vorstehenden Druckschrift DE29922217U1 erwähnte Prinzip nach dem ein Globales Positionssystem unter Berücksichtigung eines Differentialsignals arbeitet, kurz DGPS, dient zwar zur Verbesserung der Positionsgenauigkeit, vermeidet jedoch grundsätzlich nicht die vorstehend aufgezeigte Problematik. Dadurch kann zwar die Genauigkeit mit der eine Empfängerposition im Weltkoordinatensystem erhöht werden, allerdings ist eine genaue Position in Bezug zum Weltkoordinatensystem hier nicht erforderlich. Auch setzt das DGPS einen ausreichend guten Empfang der originären Satellitensignale voraus und zusätzlich sogar eine weitere externe Quelle für Korrekturdaten. Erschwerend kommt in diesem Fall überdies der Umstand hinzu, dass die "Sichtbarkeit" von Satelliten in einem typischen Lawinengelände häufig durch Bergrücken oder Felsvorsprüngen nur eingeschränkt gegeben ist, wodurch die Satellitensignale evident geschwächt werden.

Aus der GB 2312112 sowie der EP 1186904 gehen gleichfalls ähnliche Vorschläge hervor zur Nutzung von GPS-Signalen zur Ortsbestimmung verschütteter LVS-Geräte, in allen Fällen erfolgt eine eigenständige Positionsbestimmung durch das verschüttete LVS-Gerät, das die Positionsinformation an die suchenden LVS-Geräte, bspw. unter Nutzung der GSM- oder UMTS-Technik, übermittelt. Diese Ansätze setzen jedoch auch spezielle mit GPS bzw. DGPS ausgerüstete LVS-Geräte voraus. Die konform mit der eingangs zitierten Norm seit Jahrzehnten verbreiteten und im Einsatz befindlichen LVS-Geräte wären zur Umsetzung der vorgeschlagenen neuen Technologie unbrauchbar und müssten erneuert werden. Zudem müssten bestehende Normen ergänzt werden. Bereits diese beiden Forderungen erscheinen in absehbarer Zeit nicht umsetzbar zu sein.

Ein weiteres nicht zu verkennendes Problem bei bekannten LVS-Geräten betrifft den Umstand, dass die LVS-Geräte der Suchmannschaften von dem Sendemodus in den Such- bzw. Empfangsmodus umgestellt werden müssen, so dass im Falle einer Verschüttung von Rettungskräften, z.B. durch eine Nachlawine, für diese Personen kein Schutz mehr gegeben ist, zumal die Zeit für ein Rückumstellen vom Empfangsmodus in den Sendemodus fehlt.

In dem in der US 2005/0270234 A1 beschriebenen Verfahren zum Auffinden eines verborgenen Funksenders wird die Entfernung zum Funksender anhand einer den Signalstärkeverlauf wiedergebenden Kurve (path loss curve) ermittelt. Je näher die Empfangseinheit zum Funksender bewegt wird, umso größer ist die örtliche Änderung der Signalstärke.

### Darstellung der Erfindung

Es liegt die Aufgabe zugrunde ein Verfahren, ein System sowie eine Vorrichtung zur Ortung wenigstens eines Senders, vorzugsweise in Art eines Funksenders, der zumindest zeitweise Funksignale aussendet, zur Beseitigung der vorstehend zitierten Nachteile weiterzubilden. So soll es möglich sein den Ortungsvorgang präziser, sicherer und schneller als es mit den bekannten Techniken der Fall ist, durchzuführen und dies selbst in Fällen, in denen es gilt an sich bekannte Funksender zu orten, die lediglich in der Lage sind bloße Funksignale ohne ergänzende Ortsinformationen abzusenden.

Die Lösung der der Erfindung zugrunde liegenden Aufgabe ist im Anspruch 1 angegeben, der ein lösungsgemäßes Verfahren zum Orten wenigstens eines Senders zum Inhalt hat, bei dem lediglich wenigstens eine Empfangseinheit zum Einsatz kommt. Gegenstand des Anspruches 3 ist ein alternatives Verfahren zum Orten wenigstens eines Senders, das zumindest auf Basis zweier miteinander kommunizierender Sende-/Empfangseinheiten arbeitet. Ein lösungsgemäßes System zum Orten wenigstens eines Senders ist im Anspruch 8 beschrieben, das wenigstens zwei miteinander kommunizierende Sende-/Empfangseinheiten aufweist.

Das dem lösungsgemäßen Verfahren zugrunde liegende Prinzip zur Ortung wenigstens eines Senders beruht auf der Ermittlung der Relativposition des zu ortenden Senders in Bezug auf eine mittels Positionssignale ermittelbare Position einer Empfangseinheit. Die Positionssignale zur Bestimmung der Position der Empfangseinheit, die sowohl stationär als auch als portable und somit sich in der Position veränderbare Einheit ausgebildet sein kann, werden grundsätzlich von terrestrischen, vorzugsweise jedoch von Satelliten- und/oder Flugkörpergestützten Sendeeinheiten ausgesendet. In einem besonders bevorzugten Ausführungsbeispiel werden als Positionssignale Signale satellitengestützter Navigationseinrichtungen genutzt so bspw. GPS-, GLONASS- oder Gallileo-System (geplant ab 2013).

Zur Ermittlung der Relativposition des wenigstens einen zu ortenden Senders bedarf es der Detektion bzw. des Empfangs der Sendersignale des zu ortenden Senders am Ort der Empfangseinheit mit Hilfe einer geeigneten Empfangseinrichtung, die in Abhängigkeit des Senders geeignet ausgebildet ist. Zur einfacheren Beschreibung des lösungsgemäßen Verfahrens wird insbesondere Bezug genommen auf den konkreten Anwendungsfall der Ortung eines Funksenders in Form eines konventionellen LVS-Gerätes, das in der Lage ist Funksignale mit einer Frequenz von 457 kHz auszusenden.

Auf der Grundlage der am Ort der Empfangseinheit empfangenen Positionssignale sowie der seitens des zu ortenden Funksenders ausgesandten Funksignale wird die Position des Funksenders relativ zu der Position der Empfangseinheit ermittelt. Diese Position wird vorzugsweise in optisch und/oder akustisch wahrnehmbare Signale umgesetzt und beispielsweise auf einem Monitor dargestellt oder per Lautsprecher in Tonsignale transformiert und zum Zwecke einer Richtungsunterstützten Navigation an die Position des Funksenders genutzt.

Lösungsgemäß lassen sich an einem ersten Ort der Empfangseinheit Feldinformationen in Form von Feldstärke und/oder Feldlinienverlauf, d.h. Richtungsvektor, der Feldlinien des empfangenen Funksignals bestimmen. Die Empfangseinheit wird anschließend an wenigstens einen weiteren Ort bewegt, an dem gleichfalls Feldinformationen in Form von Feldstärke und/oder Feldlinienverlauf der Feldlinien des empfangenen Sendersignals bestimmt werden. Auf der Grundlage der ermittelten Feldinformationen wird ein räumliches Feldmodell ermittelt, das zum Orten des Funksenders zugrundegelegt wird. Hierbei wird in iterativer Prozessfolge ein simuliertes dreidimensionales Feldmodell an ein durch Messwerte festlegbares, räumliches Feldmodell angepasst, wobei, davon auszugehen ist, dass die Lage des Funksenders und somit auch die dreidimensionale Ausbildung der von dem Funksender ausgehenden Feldlinien stationär sind. Auch in diesem Fall wird auf der Grundlage des räumlichen Feldmodells und der Position der Empfangseinheit eine direkte Trajektorie zur Position des Funksenders ermittelt, die dem Generieren der optisch und/oder akustisch wahrnehmbaren Signalen zum Zwecke der Richtungsunterstützten Navigation an die Position des Antennensenders zugrundegelegt wird.

Eine erweiterte Version des lösungsgemäßen Verfahrens sieht den Einsatz von mehreren Empfangseinheiten vor, die im Unterschied zum vorstehenden Fall über die zusätzliche Eigenschaft verfügen, dass sie untereinander kommunizieren können und somit zusätzlich über Sendeeinheiten verfügen.

Das Verfahren zur Ortung wenigstens eines Funksenders beruht somit auf einer vernetzten Auswertung von Informationen, die mittels zwei, vorzugsweise drei oder mehreren Sende-/Empfangseinheiten, die in einem Raumbereich um den wenigstens einen zu ortenden Funksender vorgesehen werden, empfangen werden. So vermögen die einzelnen Sende-/Empfangseinheiten zum einen Positionssignale zu empfangen, die vorzugsweise von Satelliten- und/oder Flugkörper gestützten Sendern ausgestrahlt werden und mit denen eine Bestimmung der Position jeder der einzelnen Sende-/Empfangseinheiten möglich ist. Zum anderen werden seitens der um den wenigstens einen zu ortenden Funksender verteilt angeordneten Sende-/Empfangseinheiten die von dem Funksender ausgesendeten Funksignale empfangen, die im Falle der Ausbildung des zu ortenden Funksenders in Form eines konventionellen Lawinenverschüttetensuchgerätes Funksignale mit einer Frequenz von 457 kHz darstellen. Im Weiteren werden sämtliche Informationen aller beteiligten Sende-/Empfangseinheiten durch eine geeignete Informationszusammenführung, bspw. im Wege eines gegenseitigen Informationsaustausches zwischen den einzelnen Sende-/Empfangseinheiten oder durch Übermitteln der von jeder einzelnen Sende-/Empfangseinheit gewonnenen Informationen an eine zentrale Leitstelle, zum Zwecke einer Ermittlung der Position des zu ortenden Funksenders relativ zu den Sende-/Empfangseinheiten zusammengefasst und ausgewertet.

Aufgrund der Bestimmung einer Relativlage des zu ortenden Funksenders relativ zu den Sende-/Empfangseinheiten sind die Anforderungen an die absolute Genauigkeit, mit der eine Positionsermittlung für jede einzelne Sende-/Empfangseinheit vorzunehmen ist, nicht sehr hoch, vielmehr gilt dafür Sorge zu tragen, dass die ermittelten Positionen jeder einzelnen Sende-/Empfangseinheit relativ zueinander mit einer zuverlässigen Genauigkeit und Sicherheit ermittelt und angegeben werden können. Dies kann dadurch erreicht werden, indem die empfangenen Positionssignale am Ort jeder einzelnen Sende-/Empfangseinheit von jeweils identischen Signalquellen abstammen. Auch im Falle der Verwendung nur einer einzigen Empfangseinheit zur Ortung, wie vorstehend erläutert, ist es vorteilhaft nur jene Positionssignale an verschiedenen Peilorten zur berücksichtigen, die von den gleichen Signalquellen, bspw. von gleichen Satelliten, stammen. Weitere Einzelheiten hierzu werden im Weiteren näher erläutert.

Mit den ermittelten geographischen Positionsangaben der wenigstens zwei, vorzugsweise drei oder mehreren Sende-/Empfangseinheiten ist es möglich ein durch die Sende-/Empfangseinheiten definiertes Koordinatensystem zu erzeugen und in Relation dazu die Position des zu ortenden Funksenders aus den von jeder Sende-/Empfangseinheit empfangenen Funksignalen des Funksenders, bspw. im Wege einer Kreuzpeilung, zu ermitteln. Die Genauigkeit, mit der die Relativposition des zu ortenden Funksenders relativ zu den geographischen Positionen der Sende-/Empfangseinheiten bestimmt werden kann, hängt einerseits von der Anzahl der im Einsatz befindlichen Sende-/Empfangseinheiten und andererseits von der räumlichen Verteilung der vorhandenen Sende-/Empfangseinheiten relativ zu dem Funksender ab. Grundsätzlich gilt, je mehr Sende-/Empfangseinheiten zur Verfügung stehen und diese möglichst gleich verteilt längs einer virtuellen Umfangslinie angeordnet sind, die einen Flächenbereich umfasst, in dem der zu ortende Funksender zu erwarten ist, umso präziser kann die Position des Funksenders ermittelt werden.

Zum tatsächlichen Auffinden und Lokalisieren des Funksenders gilt es auf der Grundlage der ermittelten Relativposition des Funksenders zu den Positionen der Sende-/Empfangseinheiten optisch und/oder akustisch wahrnehmbare Signale zu generieren, die zum Zwecke einer richtungsunterstützten Navigation an die Position des Funksenders anhand einer mobilen Einheit dargestellt werden können.

Das lösungsgemäße Verfahren stellt somit grundsätzlich an den zu ortenden Funksender keine über die Norm ETSI DIN EN 300718 hinausgehenden Anforderungen, so dass mit dem lösungsgemäßen Verfahren auch Funkssender in Art konventioneller LVS-Geräte auffindbar sind. Durch die lösungsgemäße Korrelation aller mit den Sende-/Empfangseinheiten gewonnenen Informationen wird der Einsatz bzw. die Verwendung Satelliten- oder Flugkörper gestützter Positionssysteme, insbesondere für die alpine Bergung von lawinenverschütteten Funksendern erstmals praktikabel einsetzbar.

Ein lösungsgemäßes System zur Ortung wenigstens eines Senders, vorzugsweise eines Funksenders weist somit wenigstens zwei, vorzugsweise drei oder mehrere Sende-/Empfangseinheiten auf, die jeweils über eine erste Empfangseinrichtung zum Empfang der Funksignale des wenigstens einen Funksenders, eine zweite Empfangseinrichtung zum Empfang von Positionssignalen und eine erste Sendeeinrichtung zum Senden von auf dem Funk- und Positionssignalen beruhenden Informationssignalen vorsehen. Ferner gilt es eine Auswerteeinheit bereitzustellen, die über eine dritte Empfangseinrichtung zum Empfang der Informationssignale dient, in der sämtliche Informationen, die von allen Sende-/Empfangseinheiten ausgesandt worden sind, korreliert werden und auf der Grundlage dieser Informationssignale eine Relativposition des Funksenders relativ zu den Positionen der vorhandenen Sende-/Empfangseinheiten ermittelt. Letztlich dient wenigstens eine mobile Einheit als Navigationsmittel, die eine Signaleinheit zur Darstellung eines optisch und/oder akustisch wahrnehmbaren Signals vorsieht, zum Zwecke einer richtungsunterstützten Navigation an die Position des Funksenders.

Eine Ausführungsform für eine mögliche Ausbildung des lösungsgemäßen System sieht die Sende-/Empfangseinheiten, die wenigstens eine Auswerteeinheit sowie die wenigstens eine mobile Einheit als jeweils getrennt voneinander ausgebildete Komponenten vor, so dass in diesem Fall eine Informationsübermittlung der Informationssignale seitens der Sende-/Empfangseinheiten an die zentrale Leitstelle mit der Auswerteeinheit sowie eine Informationsübertragung von in der Leitstelle generierten Navigationskommandosignalen an die mobile Einheit erforderlich sind.

In einer besonders bevorzugten Ausbildungsform ist jedoch jede einzelne Sende-/Empfangseinheit als mobile Einheit ausgebildet, in der jeweils zugleich auch eine dezentrale, separate Auswerteeinheit sowie auch die Signaleinheit integriert sind, so dass es einem Nutzer möglich ist, mit einer derart ausgebildeten Sende-/Empfangseinheit im Verbund mit wenigstens einer weiteren, baugleichen Sende-/Empfangseinheit einen zu ortenden Funksender auf der Grundlage des vorstehend beschriebenen lösungsgemäßen Verfahrens zu orten. Zudem lässt sich eine derart ausgebildete Sende-/Empfangseinheit selbst als zu ortender Funksender einsetzen, der im Falle einer Verschüttetensituation in der gleichen Weise geortet werden kann, wie ein konventionelles LVS-Gerät. Hierfür ist in der Sende-/Empfangseinheit eine zweite Sendeeinrichtung zum Aussenden von Funksignalen, vorzugsweise mit der Frequenz 457 kHz, vorzusehen. Gleichsam herkömmlicher LVS-Geräte ist in diesem Fall auch die Sende-/Empfangseinheit mit einer Raster-/ oder Schaltereinheit ausgerüstet, mit der zwischen dem Betriebsmode "Suchen-/Empfangen" und "Senden" umgeschaltet werden kann. Im Falle des Betriebsmodus "Senden" dient die zweite an der Sende-/Empfangseinheit vorgesehene Sendeeinheit gleichfalls auch zum Abstrahlen der normierten Funksignale gemäß DIN EN 300718.

Die Bestimmung der Relativlage des zu ortenden Funksenders in Bezug auf die Positionen der einzelnen Sende-/Empfangseinheiten sieht die Erfassung bzw. Bestimmung sowohl der Feldstärke als auch des Feldlinienverlaufes der von dem Funksender ausgesandten, räumlichen Feldlinien am Ort einer jeweiligen Sende-/Empfangseinheit vor. So ist es je nach Ausprägung der Feldlinien möglich ihre absolute Feldstärke sowie einen den Feldlinienverlauf charakterisierenden Richtungsvektor am Ort der Sende-/Empfangseinheit zu bestimmen. Gemeinsam mit der jeweiligen Position der Sende-/Empfangseinheit und den gewonnenen Feldinformationen kann ein räumliches Feldmodell berechnet werden, das durch Bewegung der Sende-/Empfangseinheit mittels kontinuierlicher Nachberechnung korrigiert und letztlich verbessert werden kann, zumal durch eine räumliche Bewegung der Sende-/Empfangseinheit eine Vielzahl von räumlichen Positionen und damit verbundenen Messwerten vorliegen. Die Berechnung bzw. numerische Simulation eines räumlichen Modells der Feldlinien, die von dem zu ortenden Funksender ausgehen, ist letztlich auch dadurch möglich, da davon ausgegangen werden kann, dass die räumliche Lage sowie die Position des zu ortenden Funksenders unverändert bleibt. Mit Hilfe eines geeignet ausgebildeten Auswertealgorithmus wird versucht, auf der Grundlage der messtechnisch erfassten Feldinformationen, solange ein theoretisches Feldmodell einzupassen, bis eine vollständige Übereinstimmung zwischen Messwerte- und Feldmodell gefunden ist, so dass es möglich ist, anhand des iterativ eingepassten Feldmodells die räumliche Lage und Position des zu ortenden Funksenders zu bestimmen. Mit Hilfe eines derartig geeignet ausgewählten Feldmodells, das die räumliche Lage der von dem zu ortenden Funksender ausgehenden Feldlinien repräsentiert, eröffnet sich die Möglichkeit, abweichend zur bisherigen Praxis für das Auffinden verschütteter LVS-Geräte durch tangentiale Verfolgung der hyperbelförmig gekrümmten Feldlinien bis zum Ort des Funksenders, den zu ortenden Funksender auf direktem Wege zu lokalisieren, d. h. auf einer die Feldlinien schneidenden Trajektorie, die letztlich die Verbindungsgerade zwischen der aktuellen Position der Sende-/Empfangseinheit und dem Ort des Funksenders darstellt. Mit Hilfe einer derartigen Navigationsstrategie, die auf der messtechnischen Ermittlung des vollständigen räumlichen Feldmodells basiert, ist es möglich, die Suchzeit für das Auffinden eines zu ortenden Funksenders deutlich zu verkürzen. Dieser Aspekt spielt insbesondere in der Lawinenverschüttetenrettung eine besonders große Rolle, zumal das Überleben verschütteter Personen in erheblichem Masse von der Dauer der gesamten Bergungsaktion abhängt.

Insbesondere die vorstehend erläuterte Ortungsstrategie auf Basis der Ermittlung der räumlichen Ausbildung der Feldlinien, ausgehend von einem ruhenden Funksenders, erfordert eine möglichst genaue Bestimmung der Positionen der einzelnen Sende-/Empfangseinheiten untereinander. Um dieser Forderung zu entsprechen eignet sich hierzu ein spezieller Betriebsmode für den Einsatz von Empfängern für Positionssignale, die vorzugsweise von satellitengestützten Sendern ausgesandte Signale zu empfangen in der Lage sind. Statt der klassischen DGPS-Methode, wie eingangs erläutert, zur Erhöhung der einzelnen Genauigkeit zur Positionserfassung im Weltkoordinatensystem, kommt ein sog. relatives Satellitenpositionssystem zum Einsatz, bei dem bei den einzelnen Empfangseinheiten zum Empfang der Positionssignale eine gemeinsame Schnittmenge hinsichtlich der empfangbaren Satellitensignalen getroffen wird, d. h. es werden nur jene Positionssignale zur Positionsbestimmung ausgewählt, die von Satelliten ausgesendet werden, die von allen Sende-/Empfangseinheiten zugleich empfangen werden können. Hierzu werden die Kennungen jener Satelliten zwischen den einzelnen Sende-/Empfangseinheiten ausgetauscht, die von sämtlichen Sende-/Empfangseinheiten empfangen und letztlich für die Positionsberechnung der geographischen Position der einzelnen Sende- und Empfangseinheiten zugrunde gelegt werden. Hierdurch werden zwar die absoluten geographischen Positionen im Weltkoordinatensystem der einzelnen Sende-/Empfangseinheiten möglicherweise ungenauer, zumal nicht sämtliche Satellitensignale ausgewertet werden können oder auch nicht ganz optimale Satellitensignale Verwendung finden, gleichwohl lassen sich die relativen Fehler der geographischen Positionen untereinander eliminieren, da dieser Fehler, bspw. bedingt durch atmosphärische Störungen oder Reflexionen, für einen einzelnen Satelliten typisch sind und somit auf sämtlichen Sende-/Empfangseinheiten annähernd identische Auswirkungen besitzen, da sie auf gleichen und somit identisch gestörten Rohdaten beruhen. Auf diese Weise ist es möglich, auch ohne externe Korrekturdaten, wie sie beim DGPS-System Einsatz finden, eine sehr hohe Genauigkeit hinsichtlich der geographischen Positionen der einzelnen Sende-/Empfangseinheiten untereinander zu erreichen. Dies gilt insbesondere auch bei gestörten bzw. beeinträchtigten Satellitensignalen, die durch schlechte Empfangsbedingungen, bspw. durch Reflexion an Objektwänden, bspw. an Gebirgsflanken hervorgerufen werden können. Selbstverständlich lässt sich die Positionsberechnung verbessern, wenn eine kombinierte Nutzung von Satelliten unterschiedlicher Navigationssysteme, bspw. GPS-System, Galileo-System, GLONASS etc möglich wird.

Vor allem zur Ortung von LVS-Geräten im alpinen Gelände trägt eine derartige Vielfachnutzung entscheidend zur Verbesserung der Systemgenauigkeit bei, zumal im alpinen Gelände Satellitensignale durch Abschattungs- oder Reflexionseffekte an Gebirgen und Gebirgswänden gestört werden. Darüber hinaus können die ggf. verschiedenen Funkfrequenzen der einzelnen unterschiedlichen globalen Navigationssatellitensysteme dazu beitragen, die Ortungsgenauigkeit zu verbessern, zumal unterschiedliche Frequenzen unterschiedlichen Einflüssen in Bezug auf Reflexions- und/oder Dämpfungseigenschaften bedingt durch die Geographie und/oder Atmosphäre unterliegen.

Wie bereits erwähnt, sieht eine besonders bevorzugte Ausführungsform für eine Sende-/Empfangseinheit die Integration sämtlicher Komponenten in eine mobile Einheit vor, in der sowohl sämtliche Empfangseinheiten sowie Sendeeinheiten als auch die Auswerte- und Anzeigeeinheit zur Darstellung optischer und/oder akustischer Signale zur richtungsunterstützten Navigationshilfe an den Ort des zu ortenden Funksenders untergebracht sind. Hierzu bietet es sich an, eine lösungsgemäß ausgebildete Sende-/Empfangseinheit als erweitertes LVS-Gerät für Suchmannschaften zu konzipieren. Durch die damit mögliche Bewegung eines derart lösungsgemäß ausgebildeten LVS-Gerätes und einer zu diesem stets in Kommunikation zu einer Vielzahl weiterer baugleich ausgebildeter LVS-Geräte wird eine dynamisch sich verbessernde Positionsberechnung eines zu ortenden Funksenders ermöglicht. Für den Fall, dass bedingt durch eine Nachlawine einzelne suchende Personen, die mit dem lösungsgemäß ausgebildeten LVS-Gerät ausgestattet sind, selbst verschüttet werden, ist es möglich, aufgrund der bestehenden Kommunikation zwischen dem verschütteten lösungsgemäß ausgebildeten LVS-Gerät und den suchenden LVS-Geräten ein beschleunigtes Wiederauffinden des verschütteten LVS-Gerätes zu realisieren. Über die bestehenden Datenverbindungen im Wege des Austausches der Informationssignale können selbst die zuletzt gemessenen Ortsinformationen des verschütteten LVS-Gerätes kommuniziert und die Sendeeinheit bei Verlust des Ortungssignals automatisch aktiviert werden. Zudem ist es auch denkbar, dass die Sendeeinheit des verschütteten LVS-Gerätes von außen manuell durch andere LVS-Geräte (suchende) aktiviert werden kann. Eine weitere automatische Aktivierung könnte erfolgen sobald sich das Suchgerät außerhalb der Kommunikationsreichweite des Systems bewegt. Auch ist es möglich aufgrund der bestehenden Kommunikationskanäle zwischen den einzelnen, suchenden Sende-/Empfangseinheiten Gerätekennungen auszutauschen, um eine Unterscheidung zwischen den einzelnen LVS-Geräten der mobilen Suchmannschaften und einem verschütteten LVS-Gerät zu treffen. Zugleich können auch die bestehenden Kommunikationskanäle zwischen den Sende-/Empfangseinheiten genutzt werden, um Zusatzinformationen zu empfangen bzw. auszutauschen, wodurch die Nutzung und eine damit verbundene Attraktivität und letztlich Marktpenetration derartig ausgebildeter LVS-Geräte erhöht bzw. verbessert werden kann. Neben einer sprachlichen Kommunikation zwischen den einzelnen LVS-Geräten und einer Positionsdarstellung in einer virtuell dargestellten Landkarte können auch ortsabhängige Hinweise, wie bspw. Navigationshilfen zur Wegfindung sowie auch Informationen über die Umgebung, die Topographie sowie Warnhinweise, bspw. "Vorsicht Nachlawine", oder Meldungen von / zur Einsatzleitung übermittelt und dargestellt werden.

Neben der vorstehend beschriebenen Anwendung als Lawinenverschüttetensuchgerät ermöglicht das lösungsgemäße Verfahren sowie das damit verbundene System zur Ortung eines Funksenders auch andere Einsatzmöglichkeiten. So können mit dem beschriebenen System auch Funksignale von Handys etc. geortet werden. Gilt es Mobiltelefone als zu ortende Funksender aufzufinden, so sind diese ggf. mit einem zusätzlichen System zum Abstrahlen permanenter HF-Signale anzuregen. Hierzu sind ggf. Signale auch mit Mobilfunkfrequenzen zu erzeugen, um ein möglichst dauerhaftes Senden im gewünschten Frequenzbereich (GSM 900/GSM 1800, UMTS, ...) zu ermöglichen.

Neben der vorstehend beschriebenen Verwendung des lösungsgemäßen Systems zur Ortung lawinenverschütteter Person ist der Einsatz der relativen Genauigkeitssteigerung bei GPS/GNSS auch auf weitere Einsatzbereiche übertragbar, bei denen nicht die absolute Genauigkeit im Weltkoordinatensystem wichtig erscheint, sondern lediglich die Genauigkeit zwischen zwei Messpunkten, d. h. eine relative Genauigkeit, relevant ist. Beispiele dafür könnte der Abstand zweier Fahrzeuge oder auch die Ausrichtung eines Objektes, bspw. eines Containers im Raum sein. Dazu könnte eine Sende-/Empfangseinheit, jeweils ausgerüstet mit zwei Sendeeinheiten, die jeweils physikalisch voneinander unterscheidbare Funksignale aussendet, geeignet sein. Mit Hilfe zweier getrennter Positionsberechnungen wäre es möglich eine genaue Richtungsbestimmung zu realisieren. Eine derartige Richtungsbestimmung wäre sogar auch ohne Bewegung des Objektes möglich.

Eine weitere vorteilhafte Ausführungsform sieht die zusätzliche Nutzung von Sensorsignalen zur Positionsbestimmung einer Sende-/Empfangseinheit vor. So eignen sich hierfür vorzugsweise Magnet- Druck- und/oder Beschleunigungssensoren, die in geeigneter Weise in der Sende-/Empfangseinheit integriert sein können. Insbesondere in Fällen, in denen die Versorgung mit Positionssignalen eingeschränkt ist, können die zusätzlichen Sensorsignale die Positionsbestimmung unterstützen.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1: Darstellung einzelner Komponenten zur Realisierung eines Ausführungsbeispiels für ein Ortungssystem,
- Fig. 2: Darstellung zur Ortungsgenauigkeit
- Fig. 3: Feinsuche längs des Feldlinienverlaufs gemäß Stand der Technik
- Fig. 4: Neuartiges Ortungsverfahren mittels Feldmodell und
- Fig. 5: Illustration zur relativen Positionsbestimmung auf der Grundlage identischer Satellitensignale.

### Wege zur Ausführung der Erfindung gewerbliche Verwendbarkeit

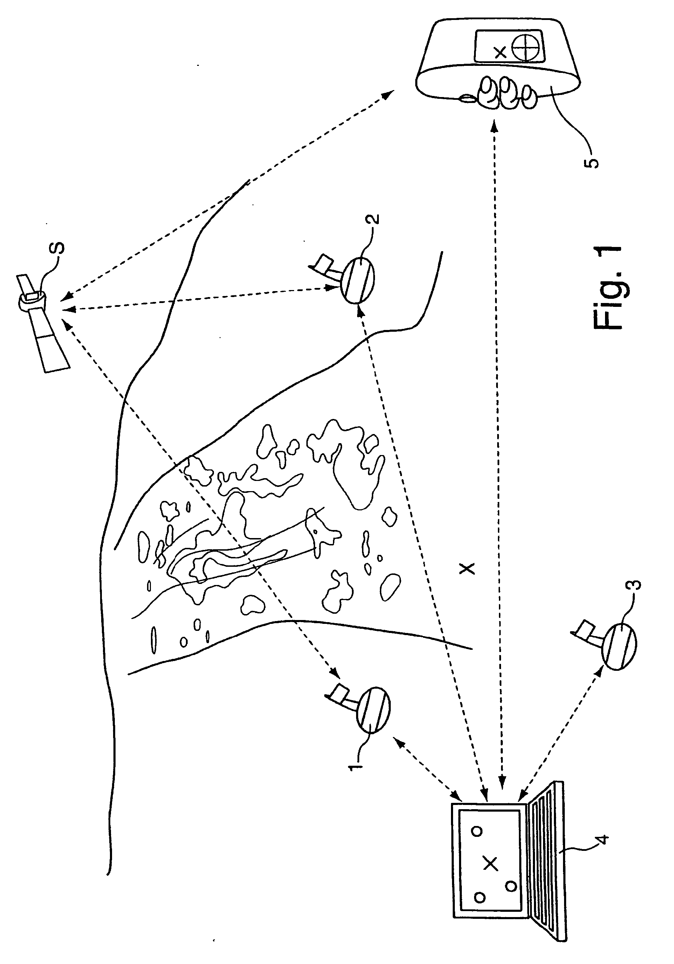

In Figur 1 ist ein Szenario illustriert, bei dem es gilt, die Position "X" eines Funksenders, der nach Abgang einer Lawine in einem alpinen Gelände an einem unbekannten Ort innerhalb des Lawinenkegels verschüttet ist, aufzufinden. Für ein schnelles und sicheres Orten des Funksenders sind im Ausführungsbeispiel gemäß Figur 1 in der Umgebung des vermuteten Ortes "X" des Funksenders drei als Bojen ausgebildete Sende-/Empfangseinheiten 1, 2, 3 platziert. Die Anordnung der Sende-/Empfangseinheiten 1, 2, 3 sollte vorzugsweise derart erfolgen, so dass sie möglichst gleich verteilt um den Verschüttetenort "X" angeordnet sind. Jede der einzelnen Sende-/Empfangseinheiten 1, 2, 3 ist zumindest mit einer Empfangseinrichtung ausgerüstet, die es ermöglicht, Positionssignale von Satelliten S eines globalen Navigationssatellitensystems zu empfangen, um auf diese Weise die geographischen Positionen jeder einzelnen Sende-/Empfangseinheit 1, 2, 3 bestimmen zu können.

Ferner verfügen die Sende-/Empfangseinheiten 1, 2, 3 jeweils über eine Empfangseinrichtung zum Empfang von Funksignalen, die der verschüttete Funksender von der zu ortenden Position X aussendet. Mit Hilfe moderner Funksignalauswertetechnik ist es möglich, die Empfangsstärke sowie die Empfangsrichtung der Funksignale des Funksenders am Ort der jeweiligen Sende-/Empfangseinheiten 1, 2, 3 zu ermitteln. Auf der Basis der genauen geographischen Positionen der einzelnen Sende-/Empfangseinheiten 1, 2, 3 sowie den Orten der Sende-/Empfangseinheiten empfangenen Funksignalen des Funksenders ist es möglich, bspw. im Wege einer Kreuzpeilung eine genaue Positionsfestlegung des verschütteten Funkgerätes an der Position X relativ zu den geographischen Positionen der Sende-/Empfangseinheiten 1, 2, 3 festzustellen. Sämtliche Informationen werden hierzu an eine Leitstelle 4 übermittelt, die bspw. in Form einer Monitor-Rechner-Einheit ausgebildet ist, die als zentrale Steuereinheit sowohl die Kommunikation sämtlicher Informationen zwischen den einzelnen Komponenten als auch den gesamten Ortungsvorgang zu überwachen vermag. Zusätzlich sind Dokumentationsfunktionen durch die Leitstelle 4 realisierbar. Die an der Leitstelle 4 von den einzelnen Sende-/Empfangseinheiten 1, 2, 3 eintreffenden Informationen, die letztlich den relativen Standort der angepeilten Verschüttetenstelle "X" relativ zu den Sende-/Empfangseinheiten 1, 2, 3 enthalten, werden derart aufbereitet, dass die relative Position der Verschüttetenstelle X in eine kartographisch eindeutigen Position umgewandelt wird, die im Weiteren zu einer mobilen Einheit 5 übermittelt wird, die eine Anzeigeeinheit 6 vorsieht, an Hand der eine Person zum Auffinden des verschütteten Funksenders exakte Navigationshilfen erhält, um auf direktestem Wege zur Verschüttetenstelle "X" zu gelangen. Hierzu bedarf es darüber hinaus auch einer exakten Ortung der mobilen Einheit 5, um stets die aktuelle Position der mobilen Einheit 5 zu Zwecken einer richtungsunterstützten Navigation an die Verschüttetenstelle "X" des Funksenders zu ermöglichen. Eine Möglichkeit der richtungsunterstützten Navigation an die Position "X" des Funksenders besteht in einer graphischen Darstellung einer topographischen Karte, in der die mobile Einheit 5 und die Verschüttetenposition "X" dargestellt werden. Der Suchende, der die mobile Einheit 5 in Händen trägt, erhält somit die Information in welcher Richtung er zu gehen hat, um auf möglichst direktestem Wege zur Verschüttetenposition "X" zu gelangen. Alternativ ist es auch möglich, an der mobilen Einheit 5 die Entfernung sowie die Richtung zum Verschüttetenort "X" sowohl numerisch als auch graphisch, bspw. durch Pfeildarstellungen optisch zu visualisieren. Ein Annähern an die Verschüttetenposition "X" mit Hilfe der mobilen Einheit 5 kann zudem auch durch akustische Signale unterstützt werden, indem sich bspw. die Wiederholfrequenz akustischer Piepsignale bei Annäherung erhöht.

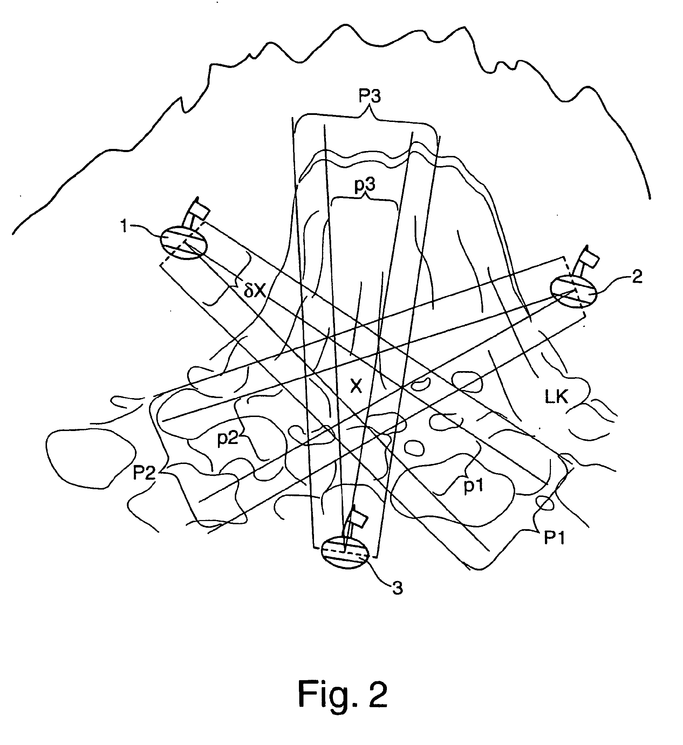

In Figur 2 ist eine Situation zum Auffinden eines durch einen Lawinenabgang verschütteten Funksenders mit Hilfe von drei im Bereich des Lawinenkegels LK positionierten lösungsgemäß ausgebildeten Funkbojen 1, 2, 3 dargestellt. Die als Funkbojen ausgebildeten Sende-/Empfangseinheiten nutzen zur Bestimmung der eigenen geographischen Position zumeist von GPS-Satelliten ausgesandte Positionssignale. Die durch das GPS-System inhärente Ungenauigkeit zur Bestimmung der geographischen Position kann bedingt durch atmosphärische sowie auch topographische Gegebenheiten insbesondere im Gebirge weiter verschlechtert werden. In Figur 2 soll die Ungenauigkeit, mit der eine exakte Positionsbestimmung der Sende-/Empfangseinheiten 1, 2, 3 durchgeführt werden kann, durch die jeweils an den Sende-/Empfangseinheiten 1, 2, 3 angebrachten strichlierten Linien δ× angedeutet sein. Es liegt auf der Hand, dass zur Positionsbestimmung der Verschüttetenstelle "X" ausgehend von jeder einzelnen Sende-/Empfangseinheit ein relativ breiter "Peilbereich" P1, P2, P3 anzusetzen ist. Der Schnittbereich aller Peilbereiche P1, P2, P3 stellt somit jenen Bereich dar, in dem der verschüttete Funksender zu suchen ist.

Eine Verbesserung der relativen Positionsbestimmung aller drei in dem Ausführungsbeispiel gemäß Figur 2 dargestellten Sende-/Empfangseinheiten 1, 2, 3 kann dadurch erreicht werden, wenn in jeder einzelnen Sende-/Empfangseinheit ausschließlich jene Positionssignale von Satelliten zur Positionsbestimmung herangezogen werden, die von allen Sende-/Empfangseinheiten zugleich / oder geeignet empfangen werden können.

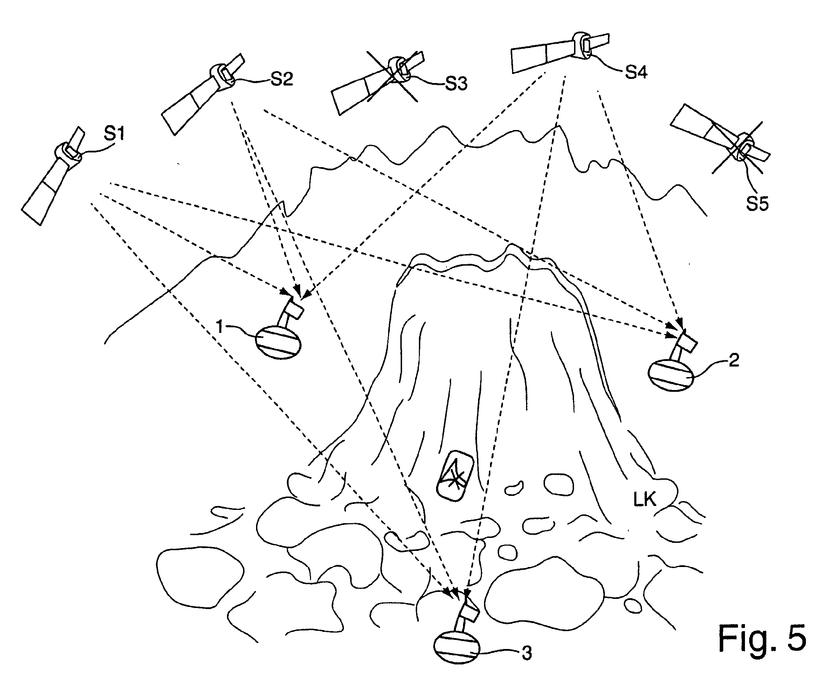

Die Sende-/Empfangseinheiten einigen sich hierbei über geeignete Kommunikationssignale auf einen gemeinsamen Nenner zur Verwendung der Satellitennavigationssignale. Dieser Ansatz der optimierten relativen Positionsbestimmung ist in Figur 5 dargestellt. So sei in diesem Fall angenommen, dass von den Sende-/Empfangseinheiten 1, 2, 3 lediglich jene Satellitensignale empfangen und ausgewertet werden, die von den Satelliten S1, S2 und S4 ausgesandt werden, Die Satellitensignale der Satelliten S3 und S5 werden hingegen von allen Sende-/Empfangseinheiten 1, 2, 3 unterdrückt.

Somit ist gewährleistet, dass sämtliche Positionssignale zur Positionsbestimmung der einzelnen Sende-/Empfangseinheiten 1, 2, 3 identischen atmosphärischen sowie auch topographischen Einflüssen unterliegen, wodurch letztlich Fehlereinflüsse bei der Positionsbestimmung der drei Sende-/Empfangseinheiten untereinander minimiert werden können. Dieser Ansatz ermöglicht eine hohe relative Positionsgenauigkeit, d.h., dass die Genauigkeit der geografischen Anordnung der Einheiten zueinander höher wird. Aufgrund einer genaueren relativen Positionsbestimmung lässt sich somit auch der Peilbereich, der von jeder einzelnen Sende-/Empfangseinheit ausgeht, eingrenzen (siehe hierzu Peilbereiche p1, p2, p3). Der in Figur 2 schattiert eingefärbte Bereich stellt den Schnittbereich der drei Peilbereiche p1, p2, p3 dar und führt gegenüber der Nutzung sämtlicher GPS-Satellitensignale zu einer erheblichen Verbesserung in der Suchgenauigkeit.

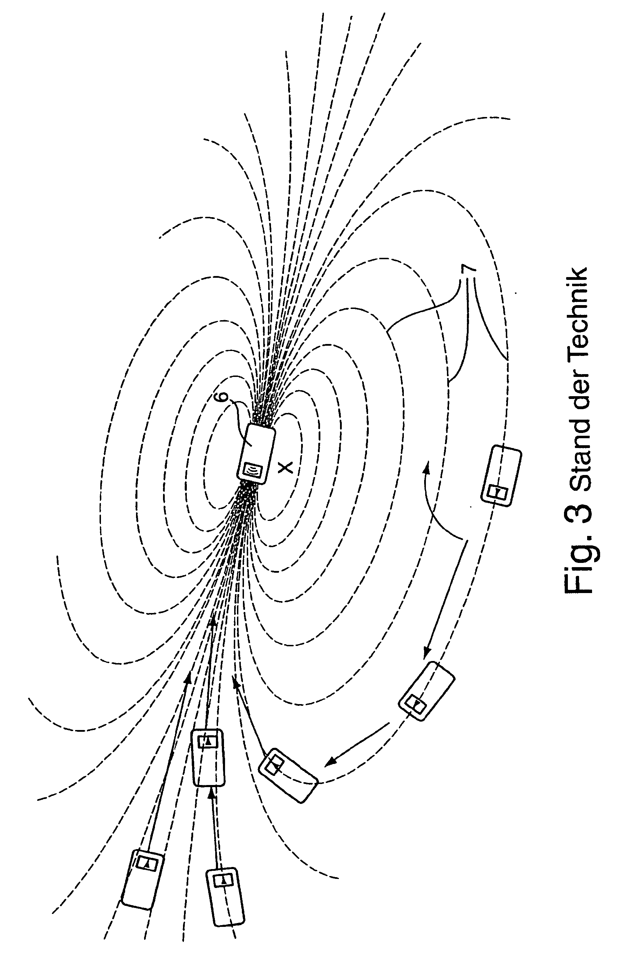

In Figur 3 ist zur Illustration der Feinsuche bzw. Feinortung eines verschütteten Funksenders 6 in Form eines konventionellen LVS-Gerätes dargestellt. Es sei angenommen, dass der zu ortende Funksender 6 an der Verschüttetenposition X positions- und lagestabil ruht und dabei die sich symmetrisch um eine innerhalb des Funksenders 6 vorgesehene Funkantenne jeweils nierenförmig ausbildenden Feldlinien 7 erzeugt. Mit Hilfe eines konventionellen LVS-Gerätes, das zum Auffinden eines verschütteten LVS-Gerätes in den Betriebsmodus "Suchen" geschaltet ist, erfolgt eine Annäherung an die Verschüttetenposition X längs bzw. tangential zu den Feldlinien 7, wie dies aus der Figur 3 zu entnehmen ist. So erfassen konventionelle LVS-Geräte räumliche Bereiche maximaler Feldstärke mit Hilfe wenigstens einer Empfangsantenne, wobei am LVS-Gerät optische oder akustische Richtungsinformationen angezeigt werden, nach denen sich der Suchende fortzubewegen hat, um zum Verschüttetenort X zu gelangen. Konventionelle LVS-Geräte setzen dabei die aktuell empfangene Feldstärke in analoge Richtungssignale gemäß dem räumlichen Verlauf der Feldlinien um.

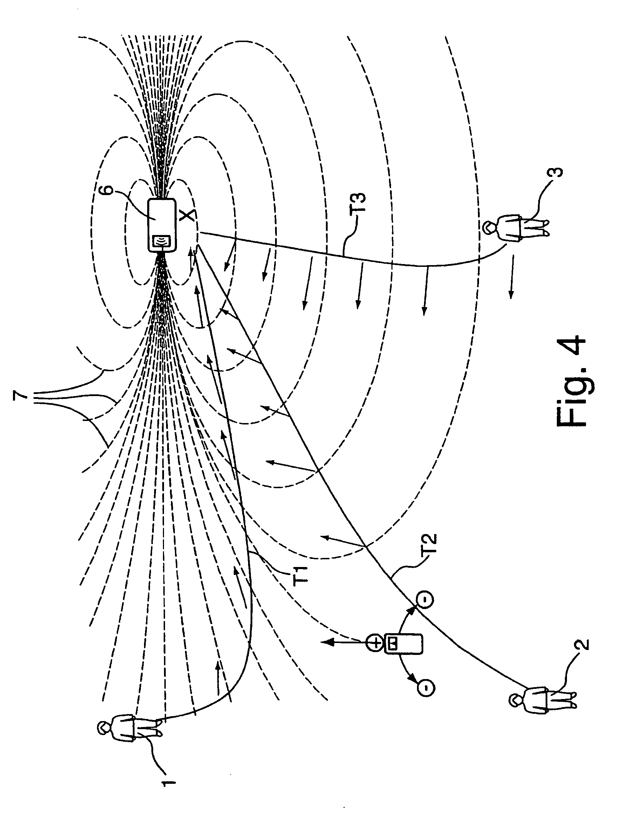

Im Unterschied hierzu ist in Figur 4 ein neuartiges Ortungsverfahren zu entnehmen, bei dem lösungsgemäß ausgebildete Sende-/Empfangseinrichtungen 1, 2, 3 eingesetzt werden, die in vorteilhafter Weise jeweils als mobile Einheiten ausgebildet sind und jeweils eine Empfangseinrichtung für den Empfang von Funksignalen aufweisen, die von einem Funksender 6 ausgesendet werden, der im Falle der Figur 4 am Verschüttetenort X liegt. Desweiteren verfügen die Sende-/Empfangseinheiten 1, 2, 3 zur Erfassung und Ermittlung der eigenen geographischen Position eine geeignete Empfangseinrichtung zum Empfang satelliten- oder flugzeuggestützter Positionssignale, die in einer ebenfalls in der Sende-/Empfangseinheit vorhandenen Auswerteeinheit verarbeitet werden. Letztlich verfügen sie ferner über eine weitere Sende-/ und Empfangseinrichtung zum Austausch von Informationen untereinander. Mit Hilfe eines vorzugsweise mehrerer derartig ausgebildeter Sende-/Empfangseinheiten 1, 2, 3 ist es möglich am Ort einer jeden Sende-/Empfangseinheit 1, 2, 3 den Absolutbetrag sowie den räumlichen Feldlinienverlauf zu erfassen und unter Nutzung eines geeigneten Auswertealgorithmus ein an die tatsächliche von dem verschütteten Funksender 6 generierte räumliche Feldlinienverteilung angepasstes dreidimensionales Feldmodell zu simulieren. Die Simulationsgenauigkeit erhöht sich zum einen durch gegenseitige Korrelation der an verschiedenen Orten empfangenen Feldstärken und Feldverläufen durch Informationsaustausch zwischen den einzelnen Sende-/Empfangseinheiten 1, 2, 3 sowie auch durch eine ständige Positionsänderung der einzelnen Sende-/Empfangseinheiten und einer dadurch bedingten kontinuierlichen Nachberechnung durch ständigen Vergleich zwischen den tatsächlich physikalischen Messwerten und dem einzupassenden, theoretischen dreidimensionalen Feldmodell. Nachdem ein die tatsächlichen Gegebenheiten entsprechendes dreidimensionales Feldmodell ermittelt ist, ist es möglich, für jede einzelne Sende-/Empfangseinheit 1, 2, 3 eine direkte Trajektorie T1, T2, T3 zum zu ortenden Funksenders 6 zu berechnen, die letztlich den optisch oder akustisch wahrnehmbaren Navigationsinformationen für die jeweils suchende Person zugrunde gelegt wird. Anhand der in Figur 4 eingezeichneten Trajektorie T1, T2, T3 lässt sich erkennen, dass die Trajektorie die jeweiligen Feldlinien 7schneiden und somit den Suchweg im Vergleich zum konventionellen Vorgehen, wie in Figur 3 dargestellt, deutlich verkürzen.

### Bezugszeichenliste

- 1, 2, 3: Sende-/Empfangseinheiten
- 4: Mobile Einheit
- 5: Leitstelle
- 6: Funksender
- 7: Feldlinien
- T1, T2, T3: Trajektorie
- P1, P2, P3: Peilsektor
- P1, p2, p3: Peilsektor
- S: Satellit
- LK: Lawinenkegel
- S1, S2, S3, S4, S5: Satelliten

## Patentansprüche

1. Verfahren zur Ortung wenigstens eines an sich bekannten Antennensenders, der zumindest zeitweise Funksignale sendet, umfassend folgende Verfahrensschritte:
- Vorsehen wenigstens einer Empfangseinheit in einem räumlichen Bereich um den wenigstens einen Antennensender,
- Empfangen der Funksignale des Antennensenders durch die Empfangseinheit,
- Empfangen von Positionssignalen durch die wenigstens eine Empfangseinheit und Ermitteln der Position der wenigstens einen Empfangseinheit,
- Auswerten der Funksignale des Antennensenders unter Berücksichtigung der Position der wenigstens einen Empfangseinheit zum Zwecke einer Ermittlung der Position des Antennensenders relativ zu der Position der wenigstens einen Empfangseinheit, derart,
dass am Ort der Empfangseinheit im empfangenen Funksignal enthaltene Feldinformationen bestimmt werden,
dass die Empfangseinheit an wenigstens einem weiteren Ort gleichfalls im empfangenen Funksignal enthaltene Feldinformationen bestimmt und
dass auf der Grundlage der ermittelten Feldinformationen sowie der Position der wenigstens einen Empfangseinheit ein räumliches Feldmodell berechnet wird, das die räumliche Lage der von dem zu ortenden Antennensender ausgehenden Feldlinien repräsentiert und zum Orten des Antennensenders zugrundegelegt wird.

2. Verfahren nach Anspruch 1,
**dadurch gekennzeichnet, dass** auf der Grundlage des räumlichen Feldmodells und der Position der Empfangseinheit eine direkte Trajektorie zur Position des Antennensenders ermittelt wird, die dem Generieren von optisch und/oder akustisch wahrnehmbaren Signalen zum Zwecke der Richtungsunterstützten Navigation an die Position des Antennensenders zugrundegelegt wird.

3. Verfahren zur Ortung wenigstens eines an sich bekannten Antennensenders, der zumindest zeitweise Funksignale aussendet, umfassend folgende Verfahrensschritte:
- Vorsehen wenigstens zweier, vorzugsweise drei oder mehr Sende-/Empfangseinheiten in einem räumlichen Bereich um den wenigstens einen Antennensender,
- Empfangen der Funksignale des Antennensenders durch die Sende-/Empfangseinheiten und Bestimmen von in den Funksignalen enthaltenen Feldinformationen,
- Empfangen von Positionssignalen durch die Sende-/Empfangseinheiten und Ermitteln jeweils der Position der Sende-/Empfangseinheiten,
- Aussenden von Informationssignalen, enthaltend jeweils die in den Funksignalen enthaltenden Feldinformationen sowie die jeweilige Position der Sende-/Empfangseinheit, seitens der Sende-/Empfangseinheiten, und
- Empfangen und Auswerten der Informationssignale jeweils durch die Sende-/Empfangseinheiten zum Zwecke einer Ermittlung der Position des Antennensenders relativ zu den Sende- /Empfangseinheiten, derart,
dass auf der Grundlage der pro Sende-/Empfangseinheit ermittelten Feldinformationen und unter Nutzung der Feldinformationen sämtlicher Sende-/Empfangseinheiten ein an eine von dem Antennensender generierte räumliche Feldlinienverteilung angepasstes räumliches Feldmodell simuliert wird, das zum Orten des Antennensenders zugrundegelegt wird, und
dass auf der Grundlage des räumlichen Feldmodells und der Position einer Sende-/Empfangseinheit eine direkte Trajektorie von der Position der Sende-/Empfangseinheit zum Antennensender ermittelt wird, die dem Generieren der optisch und/oder akustisch wahrnehmbaren Signalen zum Zwecke der Richtungsunterstützten Navigation an die Position des Antennensenders zugrundegelegt wird.

4. Verfahren nach Anspruch 3,
**dadurch gekennzeichnet, dass** pro Sende-/Empfangseinheit auf der Grundlage der empfangenen Funksignale Informationen bezüglich Richtung und/oder Entfernung von der Sende-/Empfangseinheit zu dem Sender ermittelt werden, und dass die ermittelten Richtungs- und/oder Entfernungsinformationen zusammen mit aus einer aus den Positionssignalen ermittelten Positionsinformation, die die Position der Sende-/Empfangseinheit beschreibt, als Informationssignale ausgesendet werden.

5. Verfahren nach einem der Ansprüche 1 bis 4,
**dadurch gekennzeichnet, dass** als im empfangenen Funksignal enthaltene Feldinformationen Feldstärke und/oder Feldlinienverlauf, d.h. Richtungsvektor der Feldlinien ermittelt werden.

6. Verfahren nach einem der Ansprüche 1 bis 5,
**dadurch gekennzeichnet, dass** als Positionssignale Navigationssignale von Satelliten- oder Flugkörpergestützten oder terrestrischen Sendern verwendet werden, und
dass für die Auswertung der von allen Sender-/Empfängereinheiten stammenden Informationssignale dafür Sorge getragen wird, dass die von den Sende-Empfängereinheiten empfangenen Positionssignale von den gleichen Sendern stammen.

7. Verfahren nach einem der Ansprüche 3 bis 6,
**dadurch gekennzeichnet, dass** die Sende-/Empfangseinheiten zur Ortung zweier an einem Objekt angebrachter Antennensender ausgebildet werden, die neben einer Ortung des Objektes auch die räumliche Orientierung des Objektes zu bestimmen in der Lage sind, und
dass die beiden Antennensender mit physikalisch unterscheidbaren Funksignalen senden, die von den Sende-/Empfangseinheiten empfangen und gemeinsam mit den Positionsinformationen der Sende-/Empfangseinheiten zur Positions- und Lagebestimmung des Objektes herangezogen werden.

8. System zur Ortung wenigstens eines an sich bekannten Antennensenders, der zumindest zeitweise Funksignale aussendet, mit wenigstens zwei, vorzugsweise drei oder mehreren,Sende-/Empfangseinheiten, die jeweils
- eine erste Empfangseinrichtung zum Empfang der Funksignale des wenigstens einen Antennensenders vorsehen,
- eine zweite Empfangseinrichtung zum Empfang von Positionssignalen, eine erste Sendeeinrichtung zum Senden von auf den Sender- und Positionssignalen beruhenden Informationssignalen vorsehen,
- eine Auswerteeinheit vorsehen, die eine dritte Empfangseinrichtung zum Empfang der Informationssignale vorsieht und auf der Grundlage der Informationssignale der Sende-/Empfangseinheiten sowie der aus den Positionssignalen ermittelten eigenen Position ein an eine von dem Antennensender generierte räumliche Feldlinienverteilung angepasstes räumliches Feldmodell simuliert und eine direkte Trajektorie von der eigenen Position zum zu ortenden Antennensender berechnet, und
eine Signaleinheit zur Darstellung eines optisch und/oder akustisch wahrnehmbaren Signals zum Zwecke einer Richtungsunterstützten Navigation an die Position des Antennensenders vorsehen.

9. System nach Anspruch 8,
**dadurch gekennzeichnet,**
**dass** die Auswerteeinheit eine Relativposition des wenigstens einen Senders relativ zur eigenen Position unter Berücksichtigung der empfangenen Informationssignale, die von den übrigen Sende-/Empfangseinheiten stammen, sowie der eigenen Position und der eigenen empfangenen Sendersignale ermittelt.

10. System nach Anspruch 8 oder 9,
**dadurch gekennzeichnet, dass** jede Sende-/Empfangseinheit als mobile Einheit ausgebildet ist, und
dass die Sende-/Empfangseinheit jeweils eine zweite Sendeeinrichtung vorsieht, die als Funksender ausgebildet ist und durch automatische oder manuelle Aktivierung zumindest zeitweise Funksignale aussendet.

11. System nach einem der Ansprüche 8 bis 10,
**dadurch gekennzeichnet, dass** wenigstens ein Sensor vorgesehen ist, der zur Ortsbestimmung der Sende-/Empfangseinheit nutzbar ist, vorzugsweise in Form eines Magnet-, Druck- oder Beschleunigungssensors.

## Claims

1. Method for detecting at least one known antenna transmitter, which transmits radio signals for at least part of the time, comprising the following method steps:
- providing at least one receiver unit in a spatial region around the at least one antenna transmitter,
- receiving the radio signals from the antenna transmitter by the receiving unit,
- receiving position signals by the at least one receiver unit and determining the position of the at least one receiver unit,
- analysing the radio signals from the antenna transmitter taking into account the position of the at least one receiver unit for the purpose of identifying the position of the antenna transmitter relative to the position of the at least one receiver unit, in such a manner
that at the location of the receiver unit, field information items contained in the received radio signal are identified,
that at least at one other location the receiver unit also determines field information contained in the received radio signal and
that on the basis of the identified field information and the position of the at least one receiver unit, a spatial field model is calculated that represents the spatial position of the field lines emanating from the antenna transmitter to be located and is used as a basis for locating the antenna transmitter.

2. Method according to claim 1, **characterized in that** on the basis of the spatial field model and the position of the receiver unit a direct trajectory to the position of the antenna transmitter is determined, which is used as a basis for generating optically and/or acoustically detectable signals for the purposes of direction-assisted navigation to the position of the antenna transmitter.

3. Method for locating at least one known antenna transmitter which transmits radio signals for at least part of the time, comprising the following method steps:
- providing at least two, preferably three or more, transmitter/receiver units in a spatial region around the at least one antenna transmitter,
- receiving the radio signals from the antenna transmitter by the transmitter/receiver units and determining field information contained in the radio signals,
- receiving position signals by the transmitter/receiver units and identifying the position of each of the transmitter/receiver units,
- emission of information signals, each containing the field information contained in the radio signals and the respective position of the transmitter/receiver unit, by the transmitter/receiver units, and
- receiving and analysing the information signals by each of the transmitter/receiver units for the purpose of determining the position of the antenna transmitter relative to the transmitter/receiver units, in such a manner
that on the basis of the field information identified per transmitter/receiver unit and by using the field information from all transmitter/receiver units, a spatial field model which is matched to a field line distribution generated by the antenna transmitter is simulated and used as a basis for locating the antenna transmitter, and
that on the basis of the spatial field model and the position of a transmitter/receiver unit, a direct trajectory from the position of the transmitter/receiver to the antenna transmitter is determined, which is used as a basis for generating optically and/or acoustically detectable signals for the purposes of direction-assisted navigation to the position of the antenna transmitter.

4. Method according to claim 3, **characterized in that** or each transmitter/receiver unit, on the basis of the received radio signals, information regarding direction and/or distance from the transmitter/receiver unit to the transmitter is identified, and that together with position information identified from one of the position signals, which describes the position of the transmitter/receiver unit, the identified direction and/or distance information are transmitted as information signals.

5. Method according to any one of claims 1 to 4, **characterized in that** the field information items contained in the received radio signal that are determined are field strength and/or field line trajectory, i.e., direction vector of the field lines.

6. Method according to any one of claims 1 to 5, **characterized in that** the position signals used are navigation signals from satellite-mounted or aircraft-mounted or terrestrial transmitters, and
that for the analysis of the information signals originating from all transmitter/receiver units, steps are taken to ensure that the position signals received from the transmitter/receiver units originate from the same transmitters.

7. Method according to any one of claims 3 to 6, **characterized in that** the transmitter/receiver units are designed for locating two antenna transmitters mounted on an object, which in addition to locating the object are also capable of determining the spatial orientation of the object, and
that the two antenna transmitters transmit with physically distinguishable radio signals which are received by the transmitter/receiver units and, together with the position information of the transmitter/receiver units, are used for determining the position and orientation of the object.

8. System for locating at least one known antenna transmitter which transmits radio signals for at least part of the time, having at least two, preferably three or more, transmitter/receiver units, each of which
- provides a first receiving device for receiving the radio signals of the at least one antenna transmitter,
- provides a second receiving device for receiving position signals, a first transmitting device for sending information signals based on the transmitter signals and position signals,
- provide an analysis unit, which provides a third receiving device for receiving the information signals and on the basis of the information signals of the transmitter/receiver units, and of the unit's own position identified from the position signals, simulates a spatial field model which is matched to a field line distribution generated by the antenna transmitter and calculates a direct trajectory from the unit's own position to the antenna transmitter to be located, and
provide a signal unit for representing an optically and/or acoustically detectable signal for the purposes of direction-assisted navigation to the position of the antenna transmitter.

9. System according to claim 8, **characterized in that** the analysis unit determines a relative position of the at least one transmitter relative to its own position taking account of the received information signals which originate from the other transmitter/receiver units, and of its own position and its own received transmitter signals.

10. System according to claim 8 or 9, **characterized in that** each transmitter/receiver unit is implemented as a mobile unit, and
that each transmitter/receiver unit provides a second transmitting device which is implemented as a radio transmitter and transmits radio signals for at least part of the time by means of automatic or manual activation.

11. System according to any one of claims 8 to 10, **characterized in that** at least one sensor is provided, which can be used for determining the location of the transmitter/receiver unit, preferably in the form of a magnetic, pressure or acceleration sensor.

## Revendications

1. Procédé pour la localisation d'au moins un émetteur d'antenne connu par ailleurs, lequel émet au moins périodiquement des signaux radio, comprenant les étapes suivantes du procédé :
- prévoir au moins une unité de réception dans une zone spatiale autour de l'au moins un émetteur d'antenne,
- réceptionner les signaux radio de l'émetteur d'antenne grâce à l'unité de réception,
- réceptionner des signaux de position grâce à l'au moins une unité de réception et déterminer la position de l'au moins une unité de réception,
- évaluer les signaux radio de l'émetteur d'antenne en tenant compte de la position de l'au moins une unité de réception pour les besoins de la détermination de la position de l'émetteur d'antenne par rapport à la position de l'au moins une unité de réception, de manière
à ce que l'on détermine, sur le lieu de l'unité de réception, des informations de champ contenues dans le signal radio réceptionné,
à ce que l'unité de réception détermine, à au moins un autre endroit, des informations de champ également contenues dans le signal radio réceptionné et
à ce que, sur la base des informations de champ déterminées ainsi que de la position de l'au moins une unité de réception, on calcule un modèle de champ spatial, lequel représente la position spatiale des lignes de champ partant de l'émetteur d'antenne à localiser et lequel est pris comme base pour la localisation de l'émetteur d'antenne.

2. Procédé selon la revendication 1, **caractérisé en ce que**, sur la base du modèle de champ spatial et de la position de l'unité de réception, on détermine une trajectoire directe vers la position de l'émetteur d'antenne, laquelle est prise comme base pour la génération de signaux perceptibles de manière optique et/ou acoustique pour les besoins de la navigation assistée en direction vers la position de l'émetteur d'antenne.

3. Procédé pour la localisation d'au moins un émetteur d'antenne connu par ailleurs, lequel émet au moins périodiquement des signaux radio, comprenant les étapes suivantes du procédé :
- prévoir au moins deux, de préférence trois ou davantage d'unités d'émission/réception dans une zone spatiale autour de l'au moins un émetteur d'antenne,
- réceptionner les signaux radio de l'émetteur d'antenne grâce aux unités d'émission/réception et déterminer des informations de champ contenues dans les signaux radio,
- réceptionner des signaux de position grâce aux unités d'émission/réception et déterminer respectivement la position des unités d'émission/réception,
- émettre des signaux d'information contenant respectivement les informations de champ contenues dans les signaux radio ainsi que la position respective de l'unité d'émission/réception, par les unités d'émission/réception, et
- réceptionner et évaluer les signaux d'information grâce aux unités d'émission/réception respectives pour les besoins d'une détermination de la position de l'émetteur d'antenne par rapport aux unités d'émission/réception, de manière à ce que,
sur la base des informations de champ déterminées par chaque unité d'émission/réception et en utilisant les informations de champ de l'ensemble des unités d'émission/réception, on simule un modèle de champ spatial adapté à une répartition spatiale de lignes de champ générée par l'émetteur d'antenne, lequel est pris comme base pour la localisation de l'émetteur d'antenne, et
à ce que, sur la base du modèle de champ spatial et de la position d'une unité d'émission/réception, on détermine une trajectoire directe de la position de l'unité d'émission/réception vers l'émetteur d'antenne, laquelle est prise comme base pour la génération des signaux perceptibles de manière optique et/ou acoustique pour les besoins de la navigation assistée en direction vers la position de l'émetteur d'antenne.

4. Procédé selon la revendication 3, **caractérisé en ce que** l'on détermine, par unité d'émission/réception, sur la base des signaux radio réceptionnés, des informations concernant la direction et/ou la distance de l'unité d'émission/réception par rapport à l'émetteur, et **en ce que** l'on émet les informations de direction et/ou de distance déterminées, ensemble avec une information de position déterminée à partir des signaux de position, laquelle décrit la position de l'unité d'émission/réception, en tant que signaux d'information.

5. Procédé selon l'une des revendications 1 à 4, **caractérisé en ce que** l'on détermine, en tant qu'informations de champ contenues dans le signal radio réceptionné, une intensité de champ et/ou une évolution des lignes de champ, à savoir un vecteur de direction des lignes de champ.

6. Procédé selon l'une des revendications 1 à 5, **caractérisé en ce que** l'on utilise, en guise de signaux de position, des signaux de navigation d'émetteurs assistés par satellites ou objets volants ou d'émetteurs terrestres, et
**en ce que**, pour l'évaluation des signaux d'information provenant de toutes les unités d'émission/réception, on s'assure que les signaux de position réceptionnés par les unités d'émission/réception proviennent des mêmes émetteurs.

7. Procédé selon l'une des revendications 3 à 6, **caractérisé en ce que** les unités d'émission/réception sont réalisées pour la localisation de deux émetteurs d'antenne aménagés sur un objet, lesquels sont en mesure d'également déterminer l'orientation spatiale de l'objet en plus d'une localisation de l'objet, et
**en ce que** les deux émetteurs d'antenne émettent avec des signaux radio pouvant être distingués physiquement, lesquels sont réceptionnés par les unités d'émission/réception et sont pris en compte, ensemble avec les informations de position des unités d'émission/réception, pour la détermination de la position et de la situation de l'objet.

8. Système pour la localisation d'au moins un émetteur d'antenne connu par ailleurs, lequel émet au moins périodiquement des signaux radio, avec au moins deux, de préférence trois ou davantage d'unités d'émission/réception, lesquelles prévoient
- respectivement un premier dispositif de réception pour la réception des signaux radio de l'au moins un émetteur d'antenne,
- un deuxième dispositif de réception pour la réception de signaux de position, un premier dispositif d'émission pour l'émission de signaux d'information reposant sur les signaux d'émission et de position,
- une unité d'évaluation, laquelle prévoit un troisième dispositif de réception pour la réception des signaux d'information et, sur la base des signaux d'information des unités d'émission/réception ainsi que de la position propre déterminée à partir des signaux de position, simule un modèle de champ spatial adapté à la répartition spatiale de lignes de champ générée par l'émetteur d'antenne et calcule une trajectoire directe de la position propre vers l'émetteur d'antenne à localiser, et
une unité de signalisation pour la représentation d'un signal perceptible de manière optique et/ou acoustique pour les besoins d'une navigation assistée en direction vers la position de l'émetteur d'antenne.

9. Système selon la revendication 8, **caractérisé en ce que** l'unité d'évaluation détermine une position relative de l'au moins un émetteur par rapport à la position propre en tenant compte des signaux d'information réceptionnés, lesquels proviennent des autres unités d'émission/réception, ainsi que de la position propre et des signaux d'émission propres réceptionnés.

10. Système selon les revendications 8 ou 9, **caractérisé en ce que** chaque unité d'émission/réception est réalisée en tant qu'unité mobile, et
**en ce que** l'unité d'émission/réception prévoit respectivement un deuxième dispositif d'émission, lequel est réalisé en tant qu'émetteur radio et émet, au moins périodiquement, des signaux radio grâce à une activation automatique ou manuelle.

11. Système selon l'une des revendications 8 à 10, **caractérisé en ce que** l'on prévoit au moins un capteur, lequel peut être utilisé pour la détermination de la localisation de l'unité d'émission/réception, de préférence sous la forme d'un capteur magnétique, de pression ou d'accélération.
